# EUROPÄISCHE PATENTSCHRIFT

(11) **EP 2 878 851 B1**
(45) Veröffentlichungstag und Bekanntmachung des Hinweises auf die Patenterteilung: **11.01.2017**
(21) Anmeldenummer: 14004026.2
(22) Anmeldetag: 28.11.2014
(51) Int. Cl.: F16F 1/40, B60G 11/38, B60G 11/40

(54) **Druckfeder mit Überlastungsschutz, insbesondere zwischen einem Blattfederende und einem Achskörper eines Lastkraftwagens**
Compression spring with overload protection, in particular between a leaf spring end and an axle body of a lorry
Ressort de pression ayant une protection contre les surcharges, en particulier entre une extrémité de ressort à lame et un corps d'essieu d'un poids lourd

(30) Priorität: 29.11.2013 DE 102013017977
(43) Veröffentlichungstag der Anmeldung: 03.06.2015
(73) Patentinhaber: Jörn GmbH, 71336 Waiblingen (DE)
(72) Erfinder: Seck, Gerhard, 73630 Remshalden (DE); Mursinsky, Jörg, 71522 Backnang (DE)
(74) Vertreter: Liebl, Thomas

(56) Entgegenhaltungen:
- EP-A1- 1 901 931
- EP-A2- 0 336 627
- WO-A1-94/01695
- DE-A1- 19 608 860
- DE-A1- 19 853 540
- GB-A- 901 454
- US-A- 4 416 203
- US-A- 4 754 958
- US-B1- 6 385 918
- US-B1- 6 520 360

## Beschreibung

Die Erfindung betrifft eine Druckfeder mit Überlastungsschutz, insbesondere zwischen einem Blattfederende und einem Achskörper eines Lastkraftwagens, nach dem Oberbegriff des Anspruchs 1.

Eine bekannte gattungsgemäße Druckfeder (DE 198 05 860 A1) weist eine Basisplatte und eine dazu beabstandete Druckplatte mit einem dazwischen fest angehafteten Elastomerkörper auf, sowie wenigstens ein Anschlagelement, welches einen freien Federweg als Überlastungsschutz begrenzt. Das Anschlagelement ist ein im Elastomerkörper integrierter Anschlagbolzen, der mit einem basisplattenseitigen Bolzenende in einer Aufnahmemulde der stabilen Basisplatte einliegt. Weiter ist der Anschlagbolzen in einem Elastomerkörper-Aufnahmeraum aufgenommen und im unbelasteten Zustand der Druckfeder etwa senkrecht bezüglich der stabilen Basisplatte und der stabilen Druckplatte ausgerichtet. An den Elastomerkörper-Aufnahmeraum schließt sich eine Druckplatten-Durchgangsbohrung koaxial an, in die der Anschlagbolzen mit einem freien Anschlagbolzenende bereits im unbelasteten Druckfederzustand und/oder nach einem vorbestimmten freien Druckfederweg ragt und sich weiter bei einer vorbestimmbaren Druckbelastung als Überlastschutz an einem auf der Druckplatte mit Druck aufliegenden Bauteil, insbesondere an einem Blattfederende abstützt. Nachteilig sind hier Deckelteile als Druckabstützflächen erforderlich.

Ähnliche Druckfedern sind aus WO 94/01695 A1, EP 1 901 931 A1 und US 4,416,203 A bekannt.

Eine weiter bekannte Druckfeder (DE 198 53 540 A1) besteht aus einer stabilen Basisplatte und einer dazu beabstandeten stabilen Druckplatte, wobei die Basisplatte mit dem Achskörper etwa in horizontaler Lage verbunden ist und die Druckplatte als obere Auflageplatte für das Blattfederende dient. Zwischen der Basisplatte und der Druckplatte ist ein Elastomerkörper als Gummikörper mit Zwischenblechen einvulkanisiert. Weiter sind Anschlagelemente bezüglich der Basisplatte und der Druckplatte vorgesehen, welche einen freien Federweg als Überlastungsschutz begrenzen.

Konkret bestehen hier die Anschlagelemente aus sowohl an der Basisplatte als auch an der Druckplatte randseitig angeformten, stabilen Stegen, die aufeinander zugerichtet sind und sich übergreifen. Im unbelasteten Zustand der Druckfeder sind diese Stege sowohl in vertikaler Druckrichtung als auch in Querrichtung mit einem Spalt entsprechend einem freien Federweg in Druckrichtung und Querrichtung beabstandet. Mit ansteigender Druckbelastung bzw. Querkraftbelastung stützen sich die Stege als Anschlagelemente für einen Überlastungsschutz aneinander ab.

Da die Anschlagstege den Gummikörper jeweils seitlich übergreifen, beansprucht die Druckfeder ungünstig viel Bauraum. Zudem bedingen die angeformten Anschlagstege eine komplexe Form sowohl der Basisplatte als auch der Druckplatte mit relativ hohen Herstellkosten. Weiter erfordern die Anschlagstege einen relativ hohen Materialbedarf, was zudem ungünstig sowohl das Gewicht der Druckfeder als auch die Herstellkosten erhöht. Ein weiterer Nachteil besteht darin, dass solche Druckfedern jeweils für einen bestimmten Einsatzfall dimensioniert und hergestellt werden müssen und Anpassungen einer weitgehend einheitlichen Druckfederform an unterschiedliche Gegebenheiten nicht oder nur mit verhältnismäßig großem Aufwand möglich sind.

Aufgabe der Erfindung ist es daher, eine gattungsgemäße Druckfeder mit Überlastungsschutz so weiterzubilden, dass bei guter Überlastungsschutzfunktion der Bauraumbedarf, das Gewicht und die Herstellkosten reduzierbar sind und einfache Anpassungen an unterschiedliche Lagergegebenheiten möglich sind.

Diese Aufgabe wird gelöst mit den Merkmalen des Anspruchs 1. Vorteilhafte Ausführungsformen sind Gegenstand der Unteransprüche.

Gemäß Anspruch 1 ist ein zylindrischer Anschlagbolzen am basisplattenseitigen Bolzenende halbkugelförmig konvex ausgebildet und die Aufnahmemulde ist entsprechend halbkugelförmig konkav ausgebildet. Damit kann der Anschlagbolzen in der Aufnahmemulde formschlüssig einliegen und bei einer Schubbelastung verkippen. Vorteilhaft ist dabei ein aufwändiges Deckelteil als Gegenabstützfläche nicht erforderlich.

Zweckmäßig sind der Anschlagbolzen und der Elastomerkörper-Aufnahmeraum als Elastomerkörperbohrung koaxial zylindrisch ausgeführt.

Beim Einsatz der Druckfeder in einer Lagerverbindung zwischen einem Blattfederende und einem Achskörper, insbesondere eines Doppelachsaggregats eines Lastkraftwagens, kann das Blattfederende betriebsmäßig von der Druckplatte abgehoben sein oder mit Druck- und Schubkräften auf der Druckplatte aufliegen. Für eine solche Anlageverbindung kann als Dämpfungsmaßnahme die Druckplatte ein stabiles Plattenteil mit einem Elastomerüberzug, vorzugsweise als anvulkanisierte Gummischicht aufweisen, wobei die Druckplatten-Durchgangsbohrung auch durch den Elsatomerüberzug geführt ist. Im Überlastungsfall ragt dann der Anschlagbolzen mit seinem Anschlagbolzenende sowohl durch die Druckplatte als auch durch den Elastomerüberzug und stützt sich an dem aufliegenden Bauteil, insbesondere einem Blattfederende ab.

Zudem soll sich an den halbkugelförmigen konkaven Bereich der Aufnahmemulde ein sich erweiternder Konusbereich anschließen, wobei dann bei einer Schubbelastung der Anschlagbolzen im Halbkugelbereich so weit kippen kann, bis er zu einem Überlastungsschutz an einer Konuswand des Konusbereichs anliegt. Ersichtlich kann hier durch eine Variation des Konuswinkels festgelegt werden, wann der Anschlagbolzen an der Konuswand anliegt und der Überlastungsschutz durch einen Anschlag greift, sofern der Überlastungsschutz gegebenenfalls über die Anlage des Elastomerkörpers am Anschlagbolzen noch zu keinem ausreichenden Überlastungsschutz führt.

Für einen verkantungsfreien und gedämpften Anschlag kann das freie Anschlagbolzenende konvex verrundet ausgeführt werden und gegebenenfalls mit einem Elastomerendanschlag versehen sein.

Die stabile Basisplatte und die stabile Druckplatte können in an sich bekannter Weise als Metallplatten hergestellt sein, zwischen denen als Elastomerkörper ein Gummikörper einvulkanisiert ist, der zudem ein oder mehrere Zwischenbleche aufweist. Die Elastomerkörperbohrung verläuft dabei auch mit gleichem Durchmesser durch die Zwischenbleche.

Ein bevorzugter Einsatz des erfindungsgemäßen Drucklagers besteht in einer Lagerverbindung zwischen einem Blattfederende und einem Achskörper, insbesondere eines Doppelachsaggregats eines Lastkraftwagens. Die Basisplatte ist dabei mit dem Achskörper in horizontaler Lage verbunden, wozu an den Basisplattenecken Fortsätze mit Gewindebohrungen für eine Schraubverbindung angeformt sein können.

In einer bevorzugten konkreten Ausführungsform ist dazu das Drucklager in einer Draufsicht rechteckförmig bzw. rechtwinkelig ausgebildet. Zudem weist die Druckfeder in einer Seitenansicht, insbesondere quer zu einem Blattfederende, eine konvex gewölbte Druckplatte und eine entsprechend gewölbte Basisplattenanschlussfläche für den Elastomerkörper auf. Auch die Zwischenbleche können, sofern vorhanden, entsprechend gewölbt sein. Damit wird eine gleichmäßige Krafteinleitung durch ein Blattfederende erreicht, welches insbesondere eine Belastung in Druckrichtung und in Schubrichtung längs der Wölbung bewirkt. Dabei kann der Anschlagbolzen je nach den konkreten Gegebenheiten zentral oder außermittig angeordnet sein.

In einer konkreten Ausgestaltung einer ersten Ausführungsform ist der Anschlagbolzen insbesondere zylindrisch ausgebildet und hat einen kleineren Durchmesser als der Elastomerkörper-Aufnahmeraum sowie die mit gleichem Durchmesser anschließende Druckplatten-Durchgangsbohrung. Der Anschlagbolzen ist somit von einem freien Ringraum umgeben, wobei die Spaltbreite des Ringraums einen freien Federweg bis zur Anlage des Elastomerkörpers am Anschlagbolzen nach einer vorbestimmten Druckkraft und/oder Schubkraft darstellt. Beim Einfedern der Druckfeder wird bei einer Druckkraft in Anschlagbolzenlängsrichtung das Material des Elastomerkörpers zwischen den beiden Platten in den Ringraum verdrängt und kommt daher nach einer bestimmten ansteigenden Druckkraft zur seitlichen Anlage am Anschlagbolzen, so dass dort die Reibung zwischen dem Anschlagbolzen und dem Elastomerkörper ansteigt und für einen weiteren Einfedervorgang bereits ein ansteigender Überlastungsschutz noch vor einem Bolzenanschlag bereitgestellt wird. Ähnlich erfolgt eine Anlage zwischen dem Elastomerkörper und dem Anschlagbolzen bei ansteigender Schubkraft mit entsprechend ansteigender Reibung, wobei der Anschlagbolzen in seiner Aufnahmemulde verkippt und auch dadurch ein Überlastungsschutz bei einer Schubkraftbelastung hergestellt ist. Somit erfolgt bei einer starken Verschiebung der Druckplatte bzw. des Elastomerkörpers in Druckrichtung sowie dazu in allen Schubrichtungen eine Abstützung am Anschlagzapfen als Überlastungsschutz.

Der zulässige Kippweg für den Anschlagbolzen bei einer Elastomerkörperscherung kann somit durch die Neigung einer Konuswand in der Basisplatte und/oder durch die Spaltweite des freien Ringraums zwischen dem Anschlagzapfen und der umgebenden Elastomerkörperbohrung sowie gegebenenfalls der Druckplatten-Durchgangsbohrung eingestellt werden. Durch diese Begrenzung der Federwege in alle Richtungen kann eine Überlastung des Elastomerkörpers bzw. dessen Gummipakete sicher verhindert werden.

Bei der Montage kann der Anschlagbolzen hier einfach als separates Bauteil durch die Bohrungen bis zur Aufnahmemulde eingesetzt und gegebenenfalls eingepresst werden, wobei ein am Elastomerkörper zur Bohrung hin angeformter, vorzugsweise umlaufender Elastomerwulst an einem Bolzenbereich anschließend an die Aufnahmemulde anliegt und gegebenenfalls in eine bolzenseitig umlaufende Nut eingreift. Damit wird erreicht, dass der Anschlagbolzen insbesondere als Transportsicherung nicht aus der Bohrung herausfällt. Im montierten Zustand und Betrieb wird der Anschlagbolzen durch sein Gewicht und durch das auf der Druckplatte aufliegende Bauteil, insbesondere ein Blattfederende am Herausfallen gehindert.

In einer besonders bevorzugten weiteren Ausführungsform ist der Anschlagbolzen, insbesondere als zylindrischer Anschlagbolzen formschlüssig anliegend jedoch ungehaftet im entsprechend zylindrischen Elastomerkörper-Aufnahmeraum aufgenommen. Damit wird ein wirksamer Schutz gegen Umwelteinflüsse durch eine Abdichtung des Elastomerkörper-Aufnahmeraums bei hohen, wartungsfreien Standzeiten erzielt.

Dies kann einfach dadurch erreicht werden, dass bei der Druckfederherstellung der Anschlagbolzen ohne Aufbringung eines Haftvermittlers mit in ein Gummimaterial einvulkanisiert wird.

Anhand einer Zeichnung wird die Erfindung näher erläutert.

Es zeigen:
- Fig. 1: eine unbelastete Druckfeder einer ersten Ausführungsform im Herstellzustand,
- Fig. 2: einen Längsschnitt durch die Druckfeder nach Fig. 1 entlang der Linie A-A in einer Seitenansicht,
- Fig. 3: eine Ansicht entsprechend Fig. 2 bei vertikaler Druckbelastung und einem wirksamen Überlastungsschutz,
- Fig. 4: eine Darstellung entsprechend Fig. 3 mit zusätzlicher Längsbelastung und einem wirksamen Schub- bzw. Längs-Überlastungsschutz,
- Fig. 5: einen Längsschnitt entsprechend Fig. 2 durch eine Druckfeder einer zweiten Ausführungsform, und
- Fig. 6: eine Ansicht entsprechend Fig. 5 bei einer Längsbelastung und einem entsprechenden Überlastungsschutz.

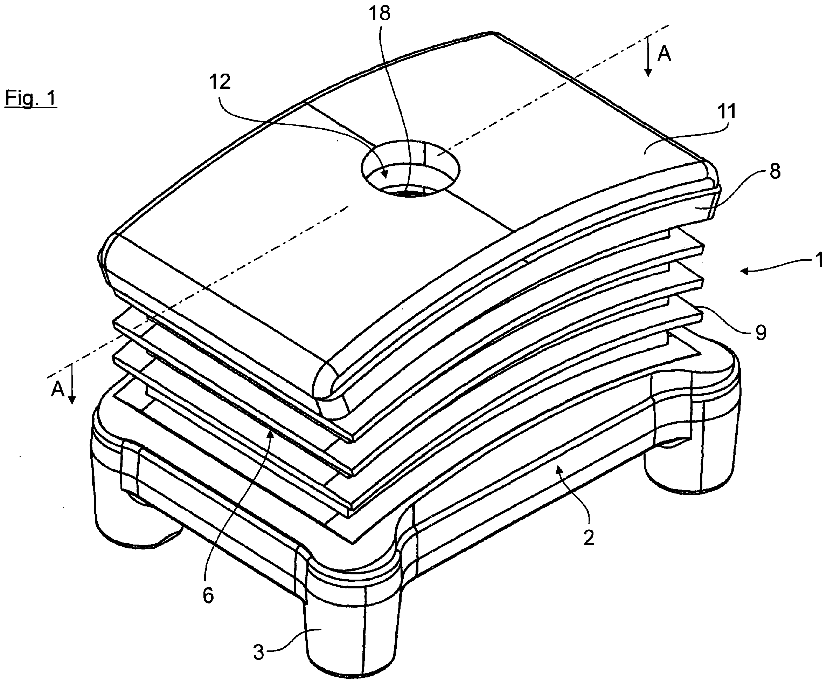

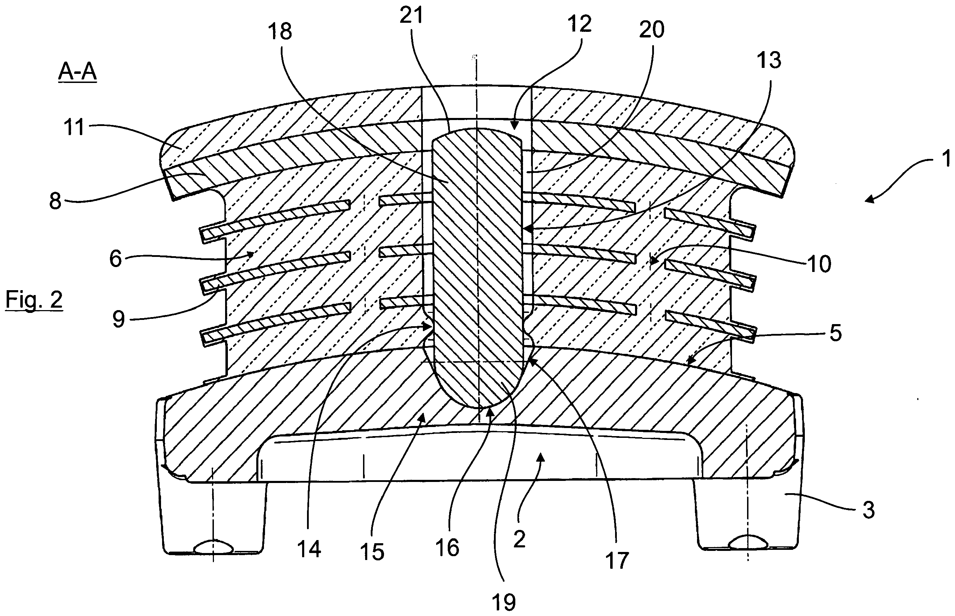

In Fig. 1 ist eine perspektivische Ansicht einer ersten Ausführungsform einer Druckfeder 1 und in Fig. 2 ein Längsschnitt entlang der Linie A-A durch die unbelastete Druckfeder 1 im Herstellzustand gezeigt.

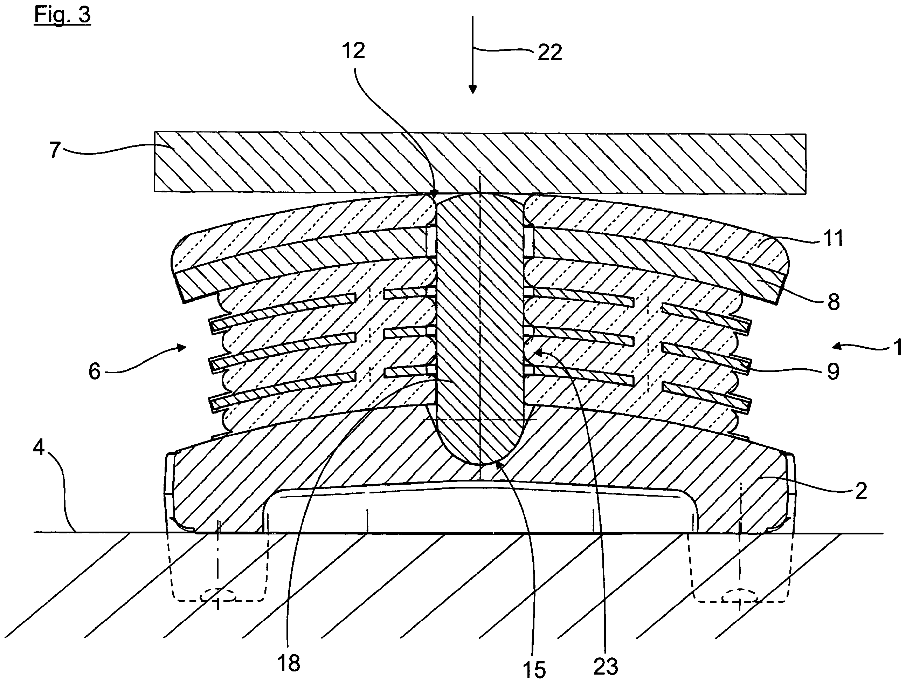

Die Druckfeder 1 besteht aus einer rechteckförmigen bzw. rechtwinkeligen Basisplatte 2 mit jeweils eckseitig angeformten Fortsätzen 3 als Anschlussteile für eine Verbindung zu einem (nicht näher dargestellten) Trägerbauteil, insbesondere einem Achskörper 4 eines Lastkraftwagens. Zudem ist die Basisplatte an ihrer Oberseite als Verbindungsfläche 5 zu einem Elastomerkörper 6 konvex gewölbt. Der Verlauf der Wölbung entspricht in der Einbaulage (Fig. 3) der Längsrichtung eines Blattfederendes 7.

Der Elastomerkörper 6 ist zum Beispiel als Gummikörper zwischen der Basisplatte 2 und einer dazu beabstandeten und entsprechend gewölbten Druckplatte 8 zusammen mit hier beispielhaft drei gleichmäßig beabstandeten Zwischenblechen 9 einvulkanisiert. Die Zwischenbleche 9 weisen in an sich bekannter Weise herstellungsbedingte Bohrungen 10 auf. Die Druckplatte 8 besteht aus einem stabilen Plattenteil, auf dem ein Elastomerüberzug 11 als Gummischicht anvulkanisiert ist.

In der Druckplatte 8 mit dem Elastomerkörperüberzug 11 ist eine zentrale Druckplatten-Durchgangsbohrung 12 angebracht, welche sich mit gleichem Durchmesser im Elastomerkörper 6 und durch die Zwischenbleche 9 zentral als Elastomerkörper-Aufnahmeraum in der Form einer Elastomerkörperbohrung 13 auf die Basisplatte 2 hin fortsetzt. Im unteren Bereich der Elastomerkörperbohrung 13 ist ein in die Elastomerkörperbohrung 13 radial hineinragender umlaufender Elastomerwulst 14 angeformt. Anschließend an die Elastomerkörperbohrung 13 ist in der Basisplatte 2 eine Aufnahmemulde 15 eingeformt, die einen unteren halbkugelförmigen Bereich aufweist, an den sich ein nach oben erweiternder Konusbereich 17 mit einem bestimmten Konuswinkel anschließt.

Im halbkugelförmigen Bereich 16 liegt ein Anschlagbolzen 18 mit einem entsprechend zugeordneten halbkugelförmig gerundeten Bolzenende 19 ein, der zudem in die Elastomerkörperbohrung 13 durch die Druckplatten-Durchgangsbohrung eingepresst ist, wobei der Elastomerwulst 14 am Anschlagbolzen 18 als Transportsicherung anliegt.

Der Durchmesser der Druckplatten-Durchgangsbohrung 12 und der Elastomerkörperbohrung 13 sind größer als der Durchmesser des Anschlagbolzens 18, so dass mit einem Spalt 20 ein freier Ringraum um den Anschlagbolzen 18 gebildet ist, wobei hier die Konusweite des Konusbereichs 17 gleich der Spaltweite des Spalts 20 ist.

Die Länge des Anschlagbolzens 18 ist so gewählt, dass er mit einem freien verrundeten Ende 21 bei unbelasteter Druckfeder in den Bereich der Druckplatte 8, jedoch nicht durch diese hindurchragt und von einem freien Ringraum mit dem Spalt 20 umgeben ist.

In Fig. 3 ist die Druckfeder 1 entsprechend Fig. 2 im montierten Zustand und Überlastungsschutzfall gezeigt bei einer Lageranordnung zwischen einem Blattfederende 7 und einem (nicht näher dargestellten) Achskörper 4 mit einer Druckbelastung (Pfeil 22) durch das Blattfederende 7. Dabei wird ersichtlich der Elastomerkörper 6 in Druckrichtung zusammengepresst, wodurch sich an den Elastomerschichten zwischen den Zwischenblechen 9 Elastomerwülste 23 in Richtung auf den Anschlagbolzen 18 ausbilden, die dort mit hoher Reibung anliegen und dadurch bei einer Druckeinfederung bereits einen Überlastungsschutz aufbauen können. In Fig. 3 ist jedoch bereits der Zustand dargestellt, dass der Elastomerkörper 6 in Druckrichtung (Pfeil 22) bereits so weit zusammengepresst ist, dass der Anschlagbolzen 18 durch die Druckplattendurchgangsbohrung 12 ragt und sich am Blattfederende 7 abstützt. Durch diesen Anschlag und durch die stabile Abstützung ist ein sicherer Überlastungsschutz in Druckrichtung (Pfeil 22) gegeben.

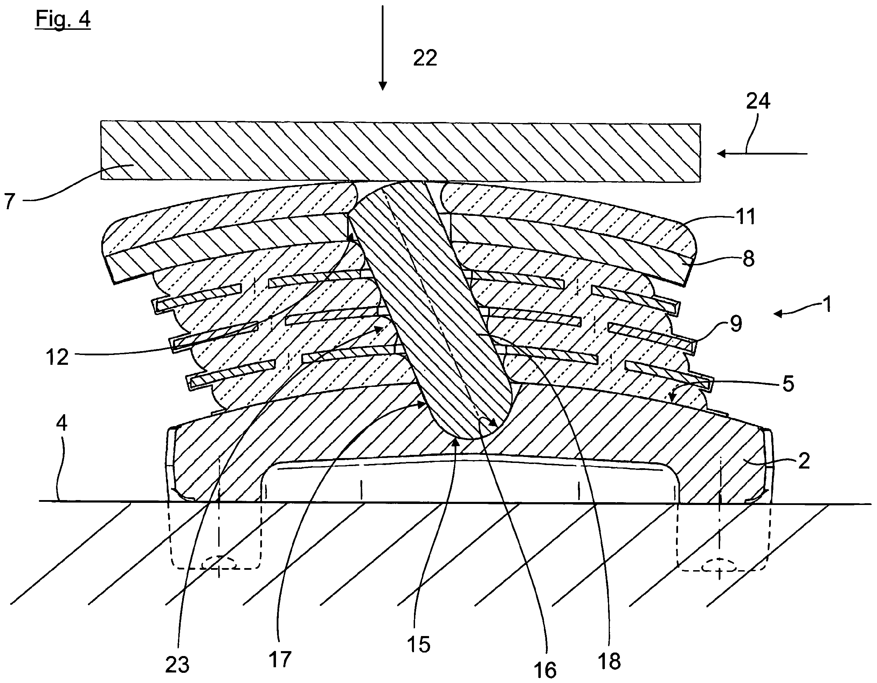

In Fig. 4 ist zusätzlich zu der Druckbelastung (Pfeil 22) aus Fig. 3 die Druckfeder 1 mit einer hier beispielhaft als Längsbelastung (Pfeil 24) dargestellten Schubkraft beaufschlagt und in einer zugeordneten Vertikal- und Schub-Überlastungsschutzposition dargestellt.

Ersichtlich ist durch die zusätzliche Schub- bzw. Längsbelastung (Pfeil 24) der Anschlagbolzen 18 im halbkugelförmigen Bereich 16 der Aufnahmemulde 15 in Richtung der Längskraft (Pfeil 24) gekippt, so lange, bis er sich an der Konuswand des Konusbereichs 17 abstützt und damit einen sicheren Überlastungsschutz bildet. Wie dargestellt kann auch durch die Druckplatten-Durchgangsbohrung 12 hindurch für den gekippten Anschlagbolzen 8 ein Anschlag erfolgen, der als vertikaler Überlastungsschutz genutzt werden kann.

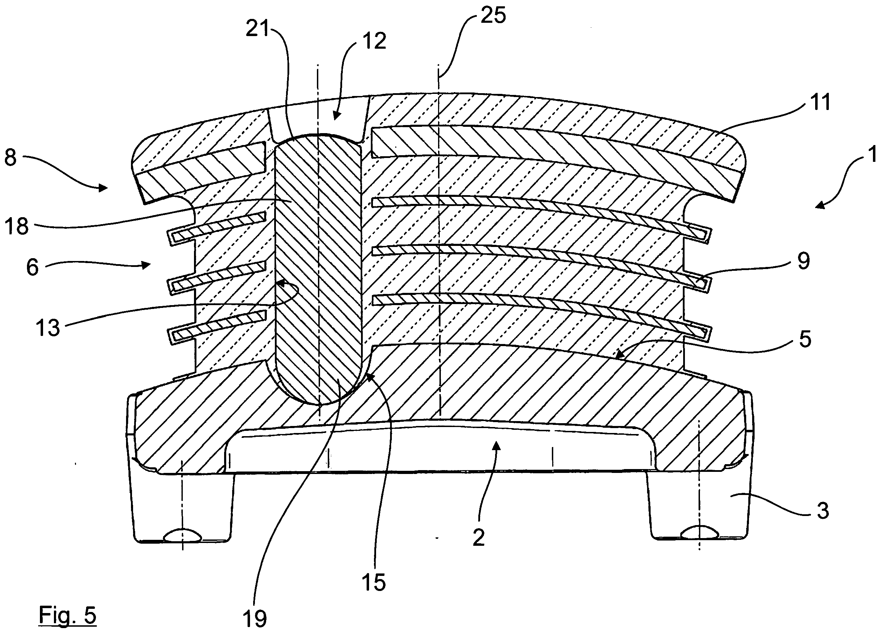

In Fig. 5 ist ein Längsschnitt entsprechend Fig. 2 durch eine zweite Ausführungsform dargestellt, die weitgehend ähnlich der ersten Ausführungsform ist, sodass im Folgenden nur auf die Unterschiede eingegangen wird und für gleiche Teile gleiche Bezugszeichen verwendet sind.

Auch bei dieser Ausführungsform besteht die Druckfeder 1 aus einer Basisplatte 2, einer Druckplatte 8 mit einem Elastomerkörperüberzug 11 und einem Elastomerkörper 6 als Gummikörper mit Zwischenblechen 9. Auch hier ist ein zylindrischer Anschlagbolzen 18 in einem Elastomerkörper-Aufnahmeraum 13 aufgenommen, der mit einem Bolzenende 19 in einer halbkugelförmigen Ausnahmemulde 15 der Basisplatte 2 einliegt.

Im Gegensatz zur ersten Ausführungsform liegt jedoch hier der Elastomerkörper-Aufnahmeraum 13 versetzt zur Längsmitte 25 der Druckfeder 1.

Ein weiterer wesentlicher Unterschied zur ersten Ausführungsform liegt darin, dass der Anschlagbolzen 18 formschlüssig anliegend, jedoch ungehaftet im Elastomerkörper-Aufnahmeraum 13 aufgenommen ist. Dies wird dadurch erreicht, dass bei der Herstellung der Druckfeder 1 der Anschlagbolzen 18 ohne Aufbringung eines Haftvermittlers mit einvulkanisiert wird.

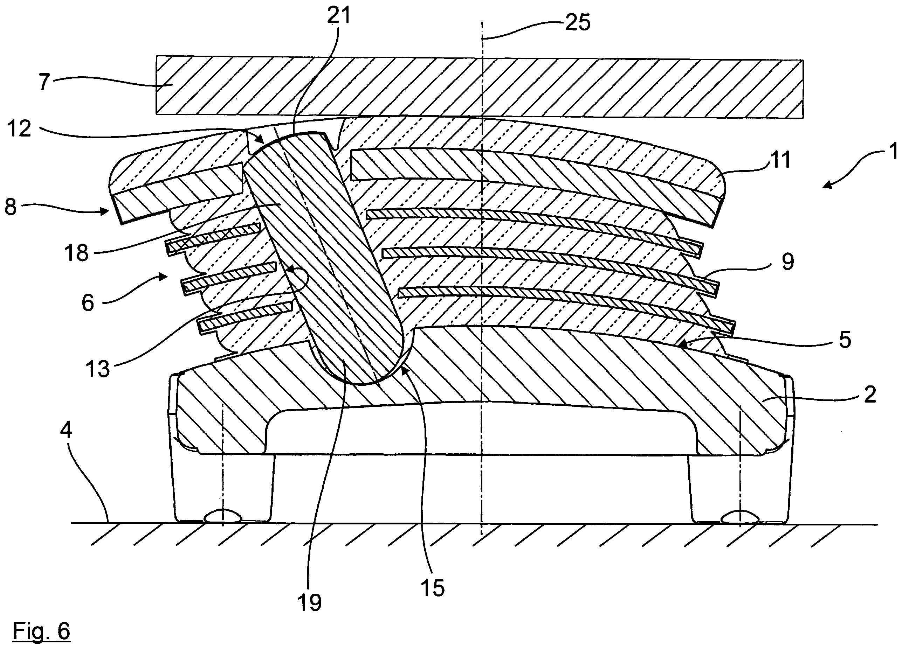

In Fig. 6 ist die Druckfeder nach Fig. 5 bei einer Längsbelastung als Schubbelastung dargestellt, wobei sich hier das obere Bolzenende für einen Schub-Überlastungsschutz auch in der Druckplatten-Durchgangsbohrung 12 abstützen kann.

### Bezugszeichenliste

- 1: Druckfeder
- 2: Basisplatte
- 3: Fortsätze
- 4: Achskörper
- 5: Verbindungsfläche
- 6: Elastomerkörper
- 7: Blattfederende
- 8: Druckplatte
- 9: Zwischenbleche
- 10: Bohrung
- 11: Elastomerüberzug
- 12: Druckplatten-Durchgangsbohrung
- 13: Elastomerkörperbohrung/Elastomerkörper-Aufnahmeraum
- 14: Elastomerwulst
- 15: Aufnahmemulde
- 16: halbkugelförmiger Bereich
- 17: Konusbereich
- 18: Anschlagbolzen
- 19: Bolzenende
- 20: Spalt
- 21: freies Ende des Anschlagbolzens
- 22: Pfeil
- 23: Elastomerwülste
- 24: Pfeil
- 25: Längsmitte

## Patentansprüche

1. Druckfeder mit Überlastungsschutz, insbesondere zwischen einem Blattfederende (7) und einem Achskörper (4) eines Lastkraftwagens,
mit einer Basisplatte (2) und einer dazu beabstandeten Druckplatte (8), mit einem dazwischen fest angehafteten Elastomerkörper (6), und
mit wenigstens einem Anschlagelement, welches einen freien Federweg als Überlastungsschutz begrenzt,
wobei das Anschlagelement ein im Elastomerkörper (6) integrierter Anschlagbolzen (18) ist,
wobei der Anschlagbolzen (18) mit einem basisplattenseitigen Bolzenende (19) in einer Aufnahmemulde (15) der Basisplatte (2) einliegt,
wobei der Anschlagbolzen (18) weiter in einem Elastomerkörper-Aufnahmeraum (13) aufgenommen ist und im unbelasteten Zustand der Druckfeder (1) etwa senkrecht bezüglich der Basisplatte (2) und der Druckplatte (8) ausgerichtet ist, und
wobei an den Elastomerkörper-Aufnahmeraum (13) eine Druckplatten-Durchgangsbohrung (12) anschließt, in die der Anschlagbolzen (18) mit einem freien Anschlagbolzenende (21) bereits im unbelasteten Druckfederzustand und/oder nach einem vorbestimmten freien Druckfederweg ragt und sich weiter bei einer vorbestimmten Druckbelastung als Überlastungsschutz an einem auf der Druckplatte (8) mit Druck (Pfeil 22) aufliegenden Bauteil, insbesondere an einem Blattfederende (7), abstützt,
**dadurch gekennzeichnet,**
**dass** ein zylindrische Anschlagbolzen (18) am basisplattenseitigen Bolzenende (19) halbkugelförmig konvex ausgebildet ist, und
**dass** die Aufnahmemulde (15) entsprechend halbkugelförmig (16) konkav ausgebildet ist.

2. Druckfeder nach Anspruch 1, **dadurch gekennzeichnet, dass** der Anschlagbolzen (18) und der Elastomerkörper-Aufnahmeraum als Elastomerkörperbohrung (13) koaxial zylindrisch ausgeführt sind.

3. Druckfeder nach Anspruch 1 oder 2, **dadurch gekennzeichnet,**
**dass** die Druckplatte (8) aus einem stabilen Plattenteil mit einem Elastomerüberzug (11) besteht und die Druckplatten-Durchgangsbohrung (12) auch durch den Elastomerüberzug (11) geführt ist, und
**dass** die Länge des Anschlagbolzens (18) so dimensioniert ist, das sich das freie Anschlagbolzenende (21) im Überlastfall an dem auf dem Elastomerüberzug (11) aufliegenden Bauteil (7) abstützt.

4. Druckfeder nach einem der Ansprüche 1 bis 3, **dadurch gekennzeichnet, dass** sich an den halbkugelförmigen konkaven Bereich (16) der Aufnahmemulde (15) ein sich erweiternder Konusbereich (17) anschließt, wobei bei einer Querbelastung (Pfeil 24) der Anschlagbolzen (18) im Halbkugelbereich (16) im Überlastungsfall soweit kippt, bis er zu einem Überlastungsschutz an einer Konuswand des Konusbereichs (17) anliegt.

5. Druckfeder nach einem der Ansprüche 1 bis 4, **dadurch gekennzeichnet, dass** das freie Anschlagbolzenende (21) konvex verrundet ist und gegebenenfalls einen Elastomerendanschlag aufweist.

6. Druckfeder nach einem der Ansprüche 1 bis 5, **dadurch gekennzeichnet, dass** die Basisplatte (2) und die Druckplatte (8) Metallplatten sind, zwischen denen als Elastomerkörper (6) ein Gummikörper einvulkanisiert ist.

7. Druckfeder nach einem der Ansprüche 1 bis 6, **dadurch gekennzeichnet, dass** in den Elastomerkörper (6), insbesondere in einen Gummikörper, wenigstens ein, bevorzugt mehrere, quer zur Druckrichtung (Pfeil 22) liegende Zwischenbleche (9) festhaftend eingebracht, insbesondere einvulkanisiert, sind und sich der Elastomerkörper-Aufnahmeraum (13) für den Anschlagbolzen (18) entsprechend auch durch das wenigstens eine Zwischenblech (9) erstreckt.

8. Druckfeder nach einem der Ansprüche 1 bis 7, **dadurch gekennzeichnet, dass** die Druckfeder (1) in einer Lagerverbindung zwischen einem Blattfederende (7) und einem Achskörper (4), insbesondere eines Doppelachsaggregats eines Lastkraftwagens, so angeordnet ist, dass die Basisplatte (2) mit dem Achskörper (4) etwa in horizontaler Lage verbunden ist und die Druckplatte (8) als obere Auflageplatte für das Blattfederende (7) ausgebildet ist.

9. Druckfeder nach einem der Ansprüche 1 bis 8, **dadurch gekennzeichnet,**
**dass** die Druckfeder (1) in einer Draufsicht rechteckförmig bzw. rechtwinklig ausgebildet ist, und
**dass** die Druckfeder (1) in einer Seitenansicht, insbesondere quer zu einem Blattfederende (7), eine konvex gewölbte Druckplatte (8) und eine entsprechend gewölbte Basisplattenanschlussfläche (5) für den Elastomerkörper (6), sowie entsprechend gewölbte Zwischenbleche (9) aufweist.

10. Druckfeder nach einem der Ansprüche 1 bis 9, **dadurch gekennzeichnet, dass** der Anschlagbolzen (18) zentral oder aus der Lagermitte, insbesondere bezüglich der Wölbung versetzt angeordnet ist.

11. Druckfeder nach einem der Ansprüche 1 bis 10, **dadurch gekennzeichnet, dass** der Anschlagbolzen (18) als separat eingestecktes Bauteil einen kleineren Durchmesser als der Elastomerkörper-Aufnahmeraum (13) und die Druckplatten-Durchgangsbohrung (12) aufweist, so dass der Anschlagbolzen (18) von einem freien Ringraum umgeben ist, wobei die Spaltbreite (20) des Ringraums den freien Federweg bis zur Anlage des Elastomerkörpers (6) am Anschlagbolzen (18) nach einer vorbestimmten Druckkraft (Pfeil 22) und/oder Schubkraft (Pfeil 24) darstellt.

12. Druckfeder nach Anspruch 11, **dadurch gekennzeichnet, dass** der Anschlagbolzen (18) mit einem im unbelasteten Zustand anliegenden, vorzugweise umlaufenden, Elastomerwulst (14) des Elastomerkörpers (6) an einem Bolzenbereich anschließend an die Aufnahmemulde (15) im Elastomerkörper-Aufnahmeraum (13) gehalten ist.

13. Druckfeder nach einem der Ansprüche 1 bis 10, **dadurch gekennzeichnet, dass** der Anschlagbolzen (18) formschlüssig anliegend, jedoch ungehaftet im Elastomerkörper-Aufnahmeraum (13) aufgenommen ist.

14. Druckfeder nach Anspruch 13, **dadurch gekennzeichnet, dass** bei der Druckfederherstellung der Anschlagbolzen (18) ohne Haftvermittler bei einem Elastomermaterial als Gummimaterial mit einvulkanisiert ist.

## Claims

1. Compression spring with overload protection, in particular between a leaf spring end (7) and an axle beam (4) of a lorry, having a base plate (2) and a pressure plate (8) which is spaced apart from it, having an elastomer body (6) which is stuck fixedly in between, and having at least one stop element which delimits a free spring travel as overload protection, the stop element being a stop bolt (18) which is integrated into the elastomer body (6), the stop bolt (18) lying as with a base plate-side bolt end (19) in a receiving recess (15) of the base plate (2), the stop bolt (18), furthermore, being received in an elastomer body receiving space (13) and, in the unloaded state of the compression spring (1), being oriented approximately perpendicularly with regard to the base plate (2) and the pressure plate (8), and the elastomer body receiving space (13) being adjoined by a pressure plate through hole (12), into which the stop bolt (18) already protrudes with a free stop bolt end (21) in the unloaded compression spring state and/or after a predefined free compression spring travel and, furthermore, is supported in the case of a predefined pressure load as overload protection on a component which lies on the pressure plate (8) under pressure load (arrow 22), in particular on a leaf spring end (7), **characterized in that** a cylindrical stop bolt (18) is of hemispherically convex configuration at the base plate-side bolt end (19), and **in that** the receiving recess (15) is correspondingly of hemispherically (16) concave configuration.

2. Compression spring according to Claim 1, **characterized in that** the stop bolt (18) and the elastomer body receiving space as an elastomer body hole (13) are of coaxially cylindrical configuration.

3. Compression spring according to Claim 1 or 2, **characterized in that** the pressure plate (8) consists of a stable plate part with an elastomer coating (11), and the pressure plate through hole (12) is also guided through the elastomer coating (11), and **in that** the length of the stop bolt (18) is dimensioned in such a way that, in the overload case, the free stop bolt end (21) is supported on the component (7) which lies on the elastomer coating (11).

4. Compression spring according to one of Claims 1 to 3, **characterized in that** the hemispherical, concave region (16) of the receiving recess (15) is adjoined by a widening cone region (17), the stop bolt (18) tilting, in the case of a transverse load (arrow 24), in the hemispherical region (16) in the overload case until it bears against a cone wall of the cone region (17) for overload protection.

5. Compression spring according to one of Claims 1 to 4, **characterized in that** the free stop bolt end (21) is rounded convexly and possibly has an elastomer end stop.

6. Compression spring according to one of Claims 1 to 5, **characterized in that** the base plate (2) and the pressure plate (8) are metal plates, between which a rubber body is vulcanized in as elastomer body (6).

7. Compression spring according to one of Claims 1 to 6, **characterized in that** at least one, preferably a plurality of intermediate plates (9) which lie transversely with respect to the pressure direction (arrow 22) are introduced, in particular vulcanized, in a fixedly adhering manner into the elastomer body (6), in particular into a rubber body, and the elastomer body receiving space (13) for the stop bolt (18) correspondingly also extends through the at least one intermediate plate (9).

8. Compression spring according to one of Claims 1 to 7, **characterized in that** the compression spring (1) is arranged in a bearing connection between a leaf spring end (7) and an axle beam (4), in particular of a twin axle unit of a lorry, in such a way that the base plate (2) is connected to the axle beam (4) approximately in a horizontal position and the pressure plate (8) is configured as an upper bearing plate for the leaf spring end (7).

9. Compression spring according to one of Claims 1 to 8, **characterized in that**, in a plan view, the compression spring (1) is of rectangular or square configuration, and **in that** the compression spring (1), in a side view, in particular transversely with respect to a leaf spring end (7), has a convexly curved pressure plate (8) and a correspondingly curved base plate connector face (5) for the elastomer body (6), and correspondingly curved intermediate plates (9).

10. Compression spring according to one of Claims 1 to 9, **characterized in that** the stop bolt (18) is arranged centrally or offset from the bearing centre, in particular with regard to the curvature.

11. Compression spring according to one of Claims 1 to 10, **characterized in that** the stop bolt (18) has a smaller diameter as a separately plugged-in component than the elastomer body receiving space (13) and the pressure plate through hole (12), with the result that the stop bolt (18) is surrounded by a free annular space, the gap width (20) of the annular space producing the free spring travel until contact of the elastomer body (6) with the stop bolt (18) after a predefined pressure force (arrow 22) and/or thrust force (arrow 24).

12. Compression spring according to Claim 11, **characterized in that** the stop bolt (18) is held in the elastomer body receiving space (13) on a bolt region in a manner which is adjacent to the receiving recess (15) by way of a preferably circumferential elastomer bead (14) of the elastomer body (6) which is in contact in the unloaded state.

13. Compression spring according to one of Claims 1 to 10, **characterized in that** the stop bolt (18) is received in the elastomer body receiving space (13) such that it bears against it in a positively locking manner but without adhesion.

14. Compression spring according to Claim 13, **characterized in that**, during the manufacture of the compression spring, the stop bolt (18) is vulcanized in without adhesion promoter in the case of an elastomer material as rubber material.

## Revendications

1. Ressort de pression ayant une protection contre les surcharges, en particulier entre une extrémité de ressort à lame (7) et un corps d'essieu (4) d'un poids lourd,
avec une plaque de base (2) et une plaque de pression (8) espacée de celle-ci,
avec un corps élastomère (6) solidement collé entre celles-ci, et
avec au moins un élément de butée, qui limite une course libre de ressort comme protection contre les surcharges,
dans lequel l'élément de butée est un boulon de butée (18) intégré dans le corps élastomère (6),
dans lequel le boulon de butée (18) est inséré en tant qu'avec une extrémité de boulon (19) côté plaque de base dans une cuvette de réception (15) de la plaque de base (2),
dans lequel le boulon de butée (18) est en outre logé dans une chambre de réception de corps élastomère (13) et à l'état déchargé du ressort de pression (1) est orienté environ perpendiculairement par rapport à la plaque de base (2) et à la plaque de pression (8), et
dans lequel un alésage traversant de la plaque de pression (12) se raccorde à la chambre de réception de corps élastomère (13), dans lequel le boulon de butée (18) pénètre avec une extrémité libre (21) du boulon de butée déjà à l'état déchargé du ressort de pression et/ou après une course libre prédéterminée du ressort de pression et s'appuie ensuite, après une course libre prédéterminée du ressort de pression et en plus pour une charge de pression prédéterminée comme protection contre les surcharges sur un composant, en particulier sur une extrémité du ressort à lame (7), appliqué avec pression (flèche 22) sur la plaque de pression (8),
**caractérisé en ce qu'**un boulon de butée cylindrique (18) est réalisé en forme de demi-sphère convexe à l'extrémité de boulon côté plaque de base (19), et **en ce que** la cuvette de réception (15) est réalisée en forme de demi-sphère (16) concave correspondante.

2. Ressort de pression selon la revendication 1, **caractérisé en ce que** le boulon de butée (18) et la chambre de réception de corps élastomère sous forme d'alésage de corps élastomère (13) sont réalisés sous forme cylindrique coaxiale.

3. Ressort de pression selon la revendication 1 ou 2, **caractérisé en ce que** la plaque de pression (8) se compose d'une partie de plaque stable avec un revêtement en élastomère (11) et l'alésage traversant de plaque de pression (12) est également mené à travers le revêtement en élastomère (11), et **en ce que** la longueur du boulon de butée (18) est dimensionnée de telle manière que l'extrémité de boulon de butée (21) s'appuie en cas de surcharge sur le composant (7) reposant sur le revêtement en élastomère (11).

4. Ressort de pression selon l'une quelconque des revendications 1 à 3, **caractérisé en ce qu'**une région conique évasée (17) se raccorde à la région en forme de demi-sphère concave (16) de la cuvette de réception (15), dans lequel, dans le cas d'une charge transversale (flèche 24), le boulon de butée (18) bascule dans la région hémisphérique (16) en cas de surcharge, jusqu'à ce qu'il s'applique sur une paroi conique de la zone conique (17) pour une protection contre les surcharges.

5. Ressort de pression selon l'une quelconque des revendications 1 à 4, **caractérisé en ce que** l'extrémité libre de boulon de butée (21) est arrondie sous forme convexe et présente éventuellement une butée d'extrémité en élastomère.

6. Ressort de pression selon l'une quelconque des revendications 1 à 5, **caractérisé en ce que** la plaque de base (2) et la plaque de pression (8) sont des plaques métalliques, entre lesquelles un corps de caoutchouc est vulcanisé en tant que corps élastomère (6).

7. Ressort de pression selon l'une quelconque des revendications 1 à 6, **caractérisé en ce qu'**au moins une, de préférence plusieurs tôles intermédiaires (9) posées transversalement à la direction de pression (flèche 22) sont introduites avec adhérence, en particulier vulcanisées, dans le corps élastomère (6), en particulier dans un cops en caoutchouc, et la chambre de réception de corps élastomère (13) pour le boulon de butée (18) s'étend de façon correspondante aussi à travers ladite au moins une tôle intermédiaire (9).

8. Ressort de pression selon l'une quelconque des revendications 1 à 7, **caractérisé en ce que** le ressort de pression (1) est disposé dans une liaison d'appui entre une extrémité de ressort à lame (7) et un corps d'essieu (4), en particulier d'un ensemble à double essieu d'un poids lourd, de telle manière que la plaque de base (2) soit reliée au corps d'essieu (4) sensiblement en position horizontale et que la plaque de pression (8) soit réalisée en tant que plaque d'appui supérieure pour l'extrémité de ressort à lame (7).

9. Ressort de pression selon l'une quelconque des revendications 1 à 8, **caractérisé en ce que** le ressort de pression (1) est de forme rectangulaire ou à angle droit dans une vue en plan, et **en ce que** le ressort de pression (1) présente, dans une vue latérale, en particulier transversalement à une extrémité de ressort à lame (7), une plaque de pression à courbure convexe (8) et une face de raccordement de plaque de base (5) de courbure correspondante pour le corps élastomère (6), ainsi que des tôles intermédiaires (9) de courbure correspondante.

10. Ressort de pression selon l'une quelconque des revendications 1 à 9, **caractérisé en ce que** le boulon de butée (18) est disposé au centre ou est décalé par rapport au milieu d'appui, en particulier par rapport à la courbure.

11. Ressort de pression selon l'une quelconque des revendications 1 à 10, **caractérisé en ce que** le boulon de butée (18) présente, en tant que composant séparé, un plus petit diamètre que la chambre de réception de corps élastomère (13) et que l'alésage traversant de plaque de pression (12), de telle manière que le boulon de butée (18) soit entouré d'un espace annulaire libre, dans lequel la largeur de fente (20) de l'espace annulaire représente la course de ressort libre jusqu'à l'appui du corps élastomère (6) sur le boulon de butée (18) après une force de pression (flèche 22) et/ou de cisaillement (flèche 24) prédéterminée.

12. Ressort de pression selon la revendication 11, **caractérisé en ce que** le boulon de butée (18) est maintenu avec un bourrelet élastomère (14) du corps élastomère (6), appliqué à l'état non chargé, de préférence périphérique, sur une région de boulon se raccordant à la cuvette de réception (15) dans la chambre de réception de corps élastomère (13).

13. Ressort de pression selon l'une quelconque des revendications 1 à 10, **caractérisé en ce que** le boulon de butée (18) est logé en s'appliquant par emboîtement, mais sans être collé, dans la chambre de réception de corps élastomère (13).

14. Ressort de pression selon la revendication 13, **caractérisé en ce que**, lors de la fabrication du ressort de pression, le boulon de butée (18) est vulcanisé sans agent d'adhérence dans le cas d'un matériau élastomère comme matériau de caoutchouc.
